# FASCICULE DE BREVET EUROPEEN

(11) **EP 4 154 437 B1**
(45) Date de publication et mention de la délivrance du brevet: **03.01.2024**
(21) Numéro de dépôt: 21799086.0
(22) Date de dépôt: 06.10.2021
(51) Int. Cl.: H04B 10/118

(54) **TRANSMISSION PAR SIGNAUX LASER ENTRE UN SATELLITE ET UNE STATION DE RECEPTION SUR TERRE**
LASERSIGNALÜBERTRAGUNG ZWISCHEN EINEM SATELLITEN UND EINER ERDBASIERTEN EMPFANGSSTATION
LASER SIGNAL TRANSMISSION BETWEEN A SATELLITE AND AN EARTH-BASED RECEIVING STATION

(30) Priorité: 02.12.2020 FR 2012509
(43) Date de publication de la demande: 29.03.2023
(73) Titulaire: Airbus Defence and Space SAS, 31402 Toulouse Cedex 4 (FR)
(72) Inventeur: CORET, Laurent, 31402 TOULOUSE CEDEX 4 (FR); POULENARD, Sylvain, 31402 TOULOUSE CEDEX 4 (FR); JULLIEN, Alexandre, 31402 TOULOUSE CEDEX 4 (FR)
(74) Mandataire: Plasseraud IP
(86) Numéro de dépôt international: PCT/FR2021/051730
(87) Numéro de publication internationale: WO 2022/117928

(56) Documents cités:
- WO-A1-2019/190611
- WO-A1-2020/128386
- WO-A2-2016/190934
- RIEL THOMAS ET AL: "Iterative trajectory learning for highly accurate optical satellite tracking systems", ACTA ASTRONAUTICA, PERGAMON PRESS, ELMSFORD, GB, vol. 164, 17 juillet 2019 (2019-07-17), pages 121-129, XP085909586, ISSN: 0094-5765, DOI: 10.1016/J.ACTAASTRO.2019.07.012 [extrait le 2019-07-17]

## Description

### Domaine technique

La présente description concerne une transmission par signaux laser depuis un satellite vers une station de réception sur Terre. Une telle transmission peut concerner des données d'imagerie telles que couramment désignées par TMI pour TéléMesure par Images, en particulier.

### Technique antérieure

Le mode de transmission de données par signaux laser est utilisé depuis plusieurs années pour des liaisons de communication spatiales, notamment pour transmettre des données à partir d'un satellite qui est en orbite autour de la Terre à une station de réception qui est située sur Terre. Il est particulièrement utile pour transmettre de grandes quantités de données avec un débit élevé, telles que par exemple des données d'images qui ont été saisies à partir d'un satellite en orbite basse, typiquement avec une altitude d'orbite d'environ 500 kilomètres.

De façon connue, la transmission de données par signaux laser nécessite que les directions de pointage optique du terminal émetteur des données et du terminal récepteur des données soient précisément ajustées l'une par rapport à l'autre. En particulier, cet ajustement doit compenser des erreurs qui peuvent affecter la connaissance de la position relative des deux terminaux. Il doit aussi compenser des erreurs qui peuvent affecter la réalisation du pointage de chaque terminal, et aussi des déviations de la direction de propagation des signaux laser qui sont provoquées par des turbulences ou des inhomogénéités atmosphériques, etc. Pour cela, chaque terminal de communication par signaux laser est équipé d'un système d'asservissement de sa direction de pointage en boucle fermée - c'est-à-dire avec une rétroaction - qui utilise un signal représentatif d'une déviation apparente des signaux qui sont reçus par ce terminal. Un tel système est appelé système d'acquisition et de poursuite. Son fonctionnement procède principalement en deux phases qui sont enchaînées pour chaque session de communication : une phase d'acquisition lors de laquelle la direction de pointage est dirigée en boucle ouverte vers l'autre terminal, puis une phase de poursuite, évoquée précédemment et lors de laquelle la direction de pointage est maintenue dirigée vers l'autre terminal par un asservissement en boucle fermée. Chaque terminal possède alors une structure complexe à cause d'un tel système d'acquisition et de poursuite, et son prix de revient est élevé en conséquence. En particulier, chaque terminal possède deux capteurs optiques distincts : un capteur de réception qui est dédié à la conversion des signaux laser reçus en signaux électriques contenant les données transmises, et un capteur d'acquisition et de poursuite qui est dédié à la fonction de pointage du terminal.

Pour une transmission monodirectionnelle du satellite vers un terminal optique terrestre, le document WO 2018/115721 décrit que le terminal terrestre comporte des moyens de réception radiofréquence, ou réception RF, par lesquels le satellite communique sa position déterminée par GPS quand il est en visibilité du terminal terrestre.

Le document de l'état de l'art "Iterative trajectory learning for highly accurate optical satellite tracking systems", publié par RIEL Thomas et al., décrit un mécanisme d'estimation de trajectoire d'un satellite grâce à un mécanisme d'apprentissage par itération pour lequel une caméra est utilisée dans la station terrestre pour relever la position du satellite par comparaison à la position des étoiles; les données acquises permettent ensuite d'estimer plus précisément la position du satellite à son deuxième passage.

### Problème technique

A partir de cette situation, un but de la présente invention est de proposer un nouveau procédé de transmission par signaux laser pour lequel l'un au moins des deux terminaux possède une structure simplifiée.

Plus précisément, l'invention a pour but de proposer un tel procédé de transmission mis en oeuvre entre un satellite et une station de réception terrestre, pour lequel la station de réception possède une structure simplifiée, et peut par conséquent avoir un prix de revient plus bas.

### Résumé de l'invention

Pour atteindre ce but ou un autre, un premier aspect de l'invention propose un procédé de transmission de données par signaux laser, à partir d'un satellite qui est en orbite autour de la Terre à destination d'une station de réception qui est située à la surface de la Terre, ce procédé comprenant les étapes suivantes :
/1/ recueillir des données d'éphéméride relatives au satellite ;
/2/ en utilisant les données d'éphéméride, déterminer une position sur la trajectoire du satellite par laquelle ce satellite est prévu de passer après un instant prédéterminé, et appelé instant de début d'attente ;
/3/ à partir de cet instant de début d'attente, pointer une optique de la station de réception qui est adaptée pour collecter les signaux laser, vers la position déterminée à l'étape /2/, et activer un système de photodétection qui est situé dans un plan focal de l'optique et adapté pour transmettre des signaux électriques correspondant aux signaux laser à une chaîne de réception, cette chaîne de réception délivrant en sortie les données transmises ; puis
/4/ identifier un instant de détection auquel des signaux laser émis à partir du satellite sont détectés par le système de photodétection ;
/5/ en utilisant l'instant de détection identifié à l'étape /4/ et des coordonnées de la position sur la trajectoire du satellite pour laquelle les signaux laser émis à partir du satellite ont été détectés à cet instant de détection, déterminer un instant de ralliement postérieur à l'instant de détection et une position du satellite, appelée position de ralliement, à laquelle le satellite passera à l'instant de ralliement ; puis
/6/ pointer l'optique de la station de réception vers la position de ralliement et, à partir de cette position de ralliement et de l'instant de ralliement, tourner progressivement l'optique de la station de réception de façon à ce qu'elle reste pointée continûment vers le satellite alors que le satellite se déplace sur sa trajectoire, et simultanément maintenir une activation du système de photodétection de façon à recevoir les données transmises à partir du satellite pendant que l'optique de la station de réception tourne de façon synchrone par rapport au déplacement du satellite.

Dans le cadre de l'invention, on entend par données d'éphéméride du satellite un ensemble de données qui indique des positions du satellite à plusieurs instants. Ces données dépendent de l'orbite réelle du satellite, et sont couramment mises à jour à chaque passage du satellite sur son orbite par un système d'éphémérides dédié, qui est indépendant de la station de réception des données utilisée dans l'invention. A chaque passage sur son orbite, le satellite envoie une identification de sa position instantanée, par exemple une identification par GPS, au système d'éphémérides, et ce dernier met à jour et mémorise une version ainsi corrigée de l'éphéméride du satellite. Les données d'éphéméride du satellite permettent de connaître à l'avance les positions de passage du satellite, avec les instants ultérieurs auxquels le satellite passera par chacune de ces positions. Les données d'éphéméride ainsi mises à jour concernant le satellite sont alors disponibles pour la station de réception, pour mettre en oeuvre le procédé de l'invention. De cette façon, il n'est pas nécessaire que la station de réception soit pourvue d'un récepteur RF pour recevoir les coordonnées de position du satellite lors de son passage en visibilité du terminal.

Le procédé de l'invention n'utilise pas de capteur optique d'acquisition et de poursuite au sein de la station de réception, ni de rétroaction qui soit basée sur les déviations de la direction de propagation des signaux laser reçus. A la place, le procédé de l'invention exploite une connaissance a priori des positions successives du satellite, fournie par les données d'éphéméride, et met en oeuvre une séquence d'attente, de détection et de ralliement entre le pointage optique de la station de réception et le déplacement réel du satellite le long de sa trajectoire. Cette séquence d'attente, de détection et de ralliement permet de compenser un retard ou une avance du satellite dans son mouvement apparent par rapport à la Terre, quelle qu'en soit la cause, par rapport aux prévisions déduites des données d'éphéméride. Des causes possibles peuvent être en particulier une traînée du satellite dans l'atmosphère terrestre résiduelle qui est présente à l'altitude de son orbite, une incertitude sur l'altitude réelle du satellite à la suite d'un repositionnement du satellite vers son orbite cible, des effets de météo solaire, etc. La présence du satellite dans le champ optique d'entrée de la station de réception, tel que ce champ optique d'entrée est effectif pour la réception des données, est détectée directement par le système de photodétection de la voie de réception des données. Ensuite, le pointage de la station de réception est maintenu vers le satellite en utilisant le déplacement du satellite tel que connu des données d'éphéméride, après que ces dernières ont été corrigées en fonction de l'instant de détection identifié à l'étape /4/. Ainsi, la station de réception peut être dépourvue de système d'acquisition et de poursuite.

Les données qui sont transmises en utilisant le procédé de l'invention peuvent comprendre notamment des données d'images.

Dans des premiers modes de mise en oeuvre de l'invention, le pointage de la station de réception peut être fixe par rapport à la Terre pendant la phase d'attente au sein de la séquence d'attente, de détection et de ralliement. Autrement dit, à l'étape /3/ du procédé de l'invention, l'optique de la station de réception peut rester pointée fixement par rapport à la Terre vers la position qui a été déterminée à l'étape 121 sur la trajectoire du satellite. Ce pointage fixe de l'optique de la station de réception est maintenu à partir de l'instant de début d'attente jusqu'à l'instant de détection, ou jusqu'à un instant de début de procédure de ralliement qui est postérieur à cet instant de détection, ou jusqu'à une fin de durée d'attente maximale qui est prédéterminée. Un avantage de tels premiers modes de réalisation est de préserver une longueur maximale de trajectoire apparente du satellite par rapport à la station de base pour la transmission des données.

Dans des modes alternatifs de mise en oeuvre de l'invention, le pointage de la station de réception peut être varié par rapport à la Terre pendant la phase d'attente au sein de la séquence d'attente, de détection et de ralliement, de façon à réduire une vitesse apparente de déplacement relatif du satellite par rapport à la direction de pointage de la station de base. Une telle réduction de la vitesse apparente du satellite par rapport au pointage de la station de réception permet de réduire un risque que la station de réception échoue à détecter les signaux laser émis par satellite, à cause d'une durée de détection qui aurait été trop courte. Autrement dit, pour de tels modes alternatifs de mise en oeuvre, l'optique de la station de réception est tournée progressivement par rapport à la Terre à l'étape /3/ de façon à viser un point mobile sur la trajectoire du satellite qui passe ou est destiné à passer par la position déterminée à l'étape /2/, si bien qu'une vitesse relative du satellite par rapport à ce point mobile soit plus faible qu'une vitesse relative du satellite par rapport à un point de la trajectoire qui serait visé fixement par rapport à la Terre à partir de la station de réception. Cette rotation progressive de l'optique de la station de réception est continuée jusqu'à l'instant de détection, ou jusqu'à un instant de début d'une procédure de ralliement qui est postérieur à cet instant de détection, ou jusqu'à une fin de durée d'attente maximale qui est prédéterminée.

Selon un perfectionnement de l'invention, une nouvelle exécution du procédé peut être entreprise à partir de l'étape 121 si les signaux laser émis à partir du satellite ne sont pas détectés par le système de photodétection de la station de réception avant la fin d'une durée d'attente maximale prédéterminée. Ce perfectionnement permet de tenter à nouveau d'utiliser le même passage du satellite sur son orbite, sans attendre son passage suivant, pour transmettre une partie au moins des données.

De façon générale pour l'invention, l'instant de détection tel qu'identifié à l'étape /4/ peut être utilisé pour corriger les données d'éphéméride relatives au satellite. Une telle correction peut consister en un décalage temporel qui est appliqué à chaque instant associé à une position sur la trajectoire du satellite, dans les données d'éphéméride.

Avantageusement pour mettre en oeuvre l'invention, l'optique et le système de photodétection de la station de réception peuvent être adaptés de sorte que l'angle d'ouverture du champ optique d'entrée statique de la station de réception soit supérieur à une somme qui comprend au moins les contributions suivantes :
une première contribution correspondant à une limite supérieure d'une incertitude angulaire qui affecte la réalisation d'un pointage de l'optique de la station de réception, et
une seconde contribution correspondant à une limite supérieure d'une déviation angulaire produite par des turbulences atmosphériques sur la direction de propagation des signaux laser tels que collectés par l'optique de la station de réception, et
optionnellement, une troisième contribution correspondant à une limite supérieure d'une composante d'incertitude angulaire transversale, qui affecte une position du satellite telle que déduite des données d'éphéméride.

Un second aspect de l'invention propose une station de réception qui est destinée à être située à la surface de la Terre et adaptée pour recevoir des données transmises par signaux laser à partir d'un satellite qui est en orbite autour de la Terre. Cette station de réception conforme à l'invention comprend :
- des moyens pour recueillir des données d'éphéméride relatives au satellite ;
- une optique qui est adaptée pour collecter les signaux laser ;
- un système de photodétection qui est situé dans le plan focal de l'optique ;
- une chaîne de réception, qui est agencée pour recevoir en entrée des signaux électriques produits par le système de photodétection conformément aux signaux laser collectés par l'optique, et pour délivrer en sortie les données transmises ;
- un mécanisme de variation d'une direction de pointage de l'optique ; et
- un contrôleur, qui est adapté pour contrôler un fonctionnement de la station de réception.

Plus particulièrement, le contrôleur est adapté pour commander le mécanisme de variation de la direction de pointage de l'optique en fonction des données d'éphéméride et d'un instant de détection des signaux laser par le système de photodétection, de façon à exécuter un procédé qui soit conforme au premier aspect de l'invention.

Les caractéristiques supplémentaires suivantes, optionnelles, peuvent aussi être reproduites avantageusement, séparément ou en combinaison de plusieurs d'entre elles :
- le système de photodétection peut comprendre plusieurs photodétecteurs qui sont juxtaposés dans le plan focal de l'optique de la station de réception. Par exemple, il peut comprendre de quatre à seize photodétecteurs juxtaposés ;
- l'optique et le système de photodétection de la station de réception peuvent être adaptés de sorte qu'un angle d'ouverture d'un champ optique d'entrée statique de la station de réception soit supérieur à 200 microradians, de préférence supérieur ou égal à 400 microradians ; et
- chaque photodétecteur du système de photodétection peut être du type photodiode à avalanche, le système de photodétection comprenant alors plusieurs photodiodes à avalanche qui sont juxtaposées dans le plan focal de l'optique de la station de réception.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] montre une station de réception terrestre en train de recevoir des données émises par un satellite, en utilisant un mode de communication par signaux laser ;
[Fig. 2] est un schéma qui montre des directions de pointage mises en oeuvre selon l'invention pour la station de réception de [Fig. 1] ;
[Fig. 3a] est un diagramme temporel qui montre des variations de pointage de la station de réception de [Fig. 1], produites conformément à des premiers modes de mise en oeuvre de l'invention ;
[Fig. 3b] correspond à [Fig. 3a] pour un cas d'échec à une première tentative de détection ;
[Fig. 3c] correspond à [Fig. 3a] pour des modes alternatifs de mise en oeuvre de l'invention ;
[Fig. 4] est un schéma optique applicable à la station de réception de [Fig. 1] ;
[Fig. 5a] montre un système de photodétection qui est adapté pour l'invention, pour être utilisé dans la station de réception de [Fig. 1] ; et
[Fig. 5b] montre un autre système de photodétection qui est aussi adapté pour l'invention, alternatif à celui de [Fig. 5a].

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

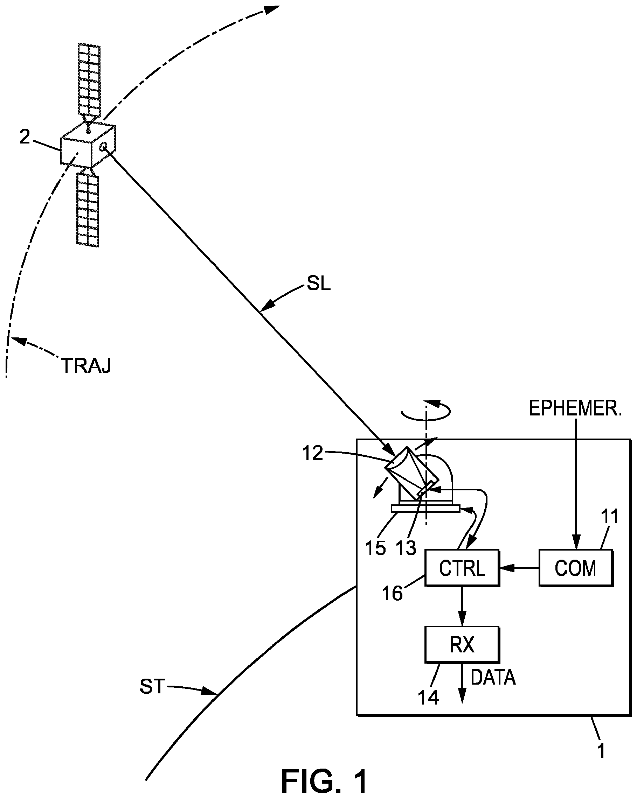

Conformément à [Fig. 1], une station de réception terrestre 1 est destinée à être en liaison de communication par transmission de signaux laser avec un satellite 2. La station de réception 1 est fixe sur le sol terrestre, désigné par ST. Le satellite 2 peut être sur une orbite basse, par exemple à une altitude de l'ordre de 500 kilomètres. Son orbite peut être une orbite polaire, mais pas exclusivement. Dans le cas d'une orbite polaire, la station de réception 1 peut avantageusement être située à proximité du pôle nord. TRAJ désigne la trajectoire apparente du satellite 2 dans le référentiel terrestre, orientée dans le sens du déplacement du satellite. La liaison de communication par transmission de signaux laser est possible tant que le satellite 2 n'est pas masqué par l'horizon pour la station de réception 1. SL désigne une trajectoire de propagation des signaux laser entre le satellite 2 et la station de réception 1.

Pour recevoir les signaux laser, la station de réception 1 est équipée d'une optique de collecte de rayonnement 12, qui est associée avec un système de photodétection 13. Le système de photodétection 13 est placé dans un plan focal de l'optique 12, de façon à transformer en signaux électriques les signaux laser qui sont incidents sur l'optique 12. L'optique 12 peut être un télescope, d'un des modèles connus de l'Homme du métier. Une sortie électrique du système de photodétection 13 est connectée à une chaîne de réception 14, notée RX. Cette chaîne de réception 14 est adaptée pour récupérer les données, par exemple des données d'images, notées DATA, qui sont transmises par le satellite 2.

Pour recevoir les signaux laser émis à partir du satellite 2, l'optique 12 de la station de réception 1 est associée en outre avec un système de pointage variable 15, qui permet de varier en azimut et en élévation la direction de pointage de l'optique 12. Le système de pointage variable 15 peut aussi être d'un des modèles connus, tel que par exemple une monture à cardan avec deux axes de rotation, couramment désigné par mécanisme de pointage grossier, ou CPM pour «Coarse Pointing Mechanism» en anglais.

Par ailleurs, la station de réception 1 est équipée d'un module de communication 11, noté COM, qui est adapté pour recevoir des données de la part d'une source externe, par exemple à travers un réseau internet non représenté. Pour l'invention, ces données reçues par la station de réception 1 via le module de communication 11 comprennent des données d'éphéméride du satellite 2, notées EPHEMER. De telles données d'éphéméride permettent de déterminer les positions auxquelles devrait se trouver le satellite 2 à différents instants. Ces données d'éphéméride sont établies d'après des positions successives du satellite 2 qui ont été déterminées, par exemple par GPS. Les données d'éphéméride sont usuellement mises à jour à chaque tour du satellite 2 sur son orbite. Toutefois, elles peuvent être affectées d'une erreur de sorte que la position réelle du satellite 2 à un instant à venir pourra être différente de sa position telle que déduite des données d'éphéméride pour cet instant. Cette erreur peut être décomposée en deux composantes : une composante longitudinale («along-track error component» en anglais) qui est parallèle à la trajectoire TRAJ du satellite 2, et une composante transversale («across-track error component» en anglais) qui est perpendiculaire à la trajectoire TRAJ. En général, la composante longitudinale de l'erreur est très supérieure à sa composante transversale. A titre d'exemple, la composante longitudinale de l'erreur peut être égale à 1000 microradians, en mesure angulaire pour la station de réception 1, alors que la composante transversale de l'erreur peut être égale à 50 microradians. Pour cette raison et sauf mention contraire dans la suite, seule la composante longitudinale d'erreur qui est susceptible d'affecter l'estimation de la position du satellite 2 d'après ses données d'éphéméride est prise en compte. L'un des objectifs de l'invention est alors de réaliser un pointage de l'optique 12 vers le satellite 2 qui soit suffisamment exact malgré cette composante longitudinale d'erreur, et ce sans utiliser de système d'acquisition et de poursuite.

Enfin, pour mettre en oeuvre l'invention, un contrôleur 16, noté CTRL, coordonne le fonctionnement de tous les éléments de la station de réception 1.

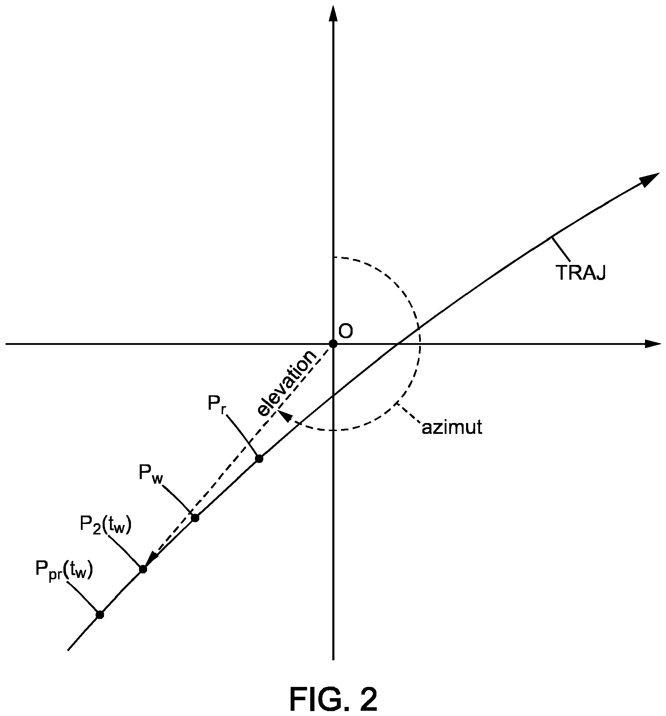

Le plan du schéma de [Fig. 2] repère en coordonnées polaires toutes les directions de pointage possibles pour la station de réception 1. L'angle polaire dans cette figure correspond à l'angle d'azimut, et la distance radiale à partir du point O repère l'angle d'élévation. Dans ces conditions, le point O correspond à la direction de zénith au lieu géographique de la station de réception 1, et l'axe vertical correspond à la direction du nord. P₂(t_{w}) désigne la position réelle du satellite 2 sur sa trajectoire TRAJ à un instant t_{w} qui est ultérieur à l'instant présent, et Pₚᵣ(t_{w}) désigne la position qui est prédite pour le satellite 2 pour le même instant t_{w} d'après ses dernières données d'éphéméride reçues via le module de communication 11. La position réelle du satellite 2 pour l'instant t_{w}, c'est-à-dire P₂(t_{w}), peut être décalée vers l'aval ou l'amont de la trajectoire TRAJ par rapport à la position prédite Pₚᵣ(t_{w}). A partir de la position prédite Pₚᵣ(t_{w}), le contrôleur 16 commande au système de pointage variable 15 de pointer l'optique 12 vers une autre position, P_{w}, qui est décalée par rapport à la position prédite Pₚᵣ(t_{w}) d'une longueur prédéterminée le long de la trajectoire TRAJ, dans le sens du déplacement apparent du satellite 2. La longueur de décalage entre Pₚᵣ(t_{w}) et P_{w} est suffisante pour assurer que le satellite 2 n'aura pas déjà dépassé la position P_{w} à l'instant t_{w} malgré la composante longitudinale d'erreur. L'optique 12 est alors pointée vers la position P_{w} avant l'instant t_{w}, et le contrôleur 16 active le système de photodétection 13 de sorte que la station de réception 1 soit dans un état d'attente de détection des signaux laser qui sont émis à partir du satellite 2, à partir de l'instant t_{w}. Pour cette raison, P_{w} peut être appelée position d'attente («waiting position» en anglais), et t_{w} a été appelé instant de début d'attente («start time of waiting» en anglais) dans la partie générale de la présente description. Le système de photodétection 13 détecte alors les signaux laser lorsque le satellite 2 passe par la position P_{w}. Le contrôleur 16 identifie cet instant de détection, noté t_{d}. Il correspond à l'instant auquel le satellite 2 passe réellement par la position P_{w}.

Indépendamment, le contrôleur 16 peut déterminer à partir des données d'éphéméride, l'instant t_{pr_w} auquel celles-ci prédisent le passage du satellite 2 par la position P_{w}. Il est alors possible de corriger les données d'éphéméride telles qu'utilisées par la suite par le contrôleur 16, en décalant l'instant de passage du satellite 2 pour chaque position sur la trajectoire TRAJ conformément à l'écart temporel t_{d} - t_{pr_w}. Des données d'éphéméride corrigées sont ainsi obtenues.

Le contrôleur 16 identifie alors un nouvel instant tᵣ qui est ultérieur à l'instant de détection t_{d}, ainsi que la position du satellite 2 à cet instant tᵣ telle que prédite d'après les données d'éphéméride corrigées. Il commande alors le système de pointage variable 15 pour que l'optique 12 soit pointée vers la position Pᵣ à l'instant tᵣ, puis commande de tourner continûment l'optique 12 pour que sa direction de pointage se déplace conformément aux données d'éphéméride corrigées. Ainsi, l'optique 12 reste pointée précisément en direction du satellite 2 à partir de la position Pᵣ. Pour cette raison, la position Pᵣ et l'instant tᵣ sont appelés position de ralliement («rallying position» en anglais) et instant de ralliement («rallying time» en anglais), respectivement. Les signaux laser qui sont émis à partir du satellite 2 après l'instant de ralliement tᵣ sont détectés correctement par le système de photodétection 13, puis les données utiles contenues dans ces signaux laser sont extraites par la chaîne de réception 14. La session de communication entre le satellite 2 et la station de réception 1 peut être poursuivie tant que le satellite est en visibilité pour la station de réception, notamment tant que le satellite n'est pas passé en dessous de l'horizon tel qu'effectif au lieu géographique de la station de réception.

Le choix de la durée entre l'instant de début d'attente t_{w} et l'instant de lancement du procédé est un paramètre prédéterminé du procédé. Il dépend notamment de la vitesse maximale du système de pointage variable 15 pour atteindre la direction de pointage vers la position d'attente P_{w}. Mais il dépend aussi d'un compromis entre d'une part le risque que le satellite 2 ait déjà dépassé la position d'attente P_{w} à l'instant t_{w}, notamment à cause de la composante longitudinale d'erreur des données d'éphéméride sur la position du satellite, et d'autre part le fait qu'un avancement trop important des positions d'attente P_{w} et de ralliement Pᵣ le long de la trajectoire TRAJ réduit la durée qui est disponible pour recevoir les signaux laser jusqu'à ce que le satellite 2 passe en dessous de l'horizon.

La longueur entre la position d'attente P_{w} et la position de ralliement Pᵣ, le long de la trajectoire TRAJ, ou de façon équivalente la durée entre l'instant de détection t_{d} et l'instant de ralliement tᵣ, est un autre paramètre prédéterminé du procédé. Elle est aussi choisie en fonction de la vitesse maximale du système de pointage variable 15 pour atteindre la direction de pointage vers la position de ralliement Pᵣ à partir de celle vers la position d'attente P_{w}.

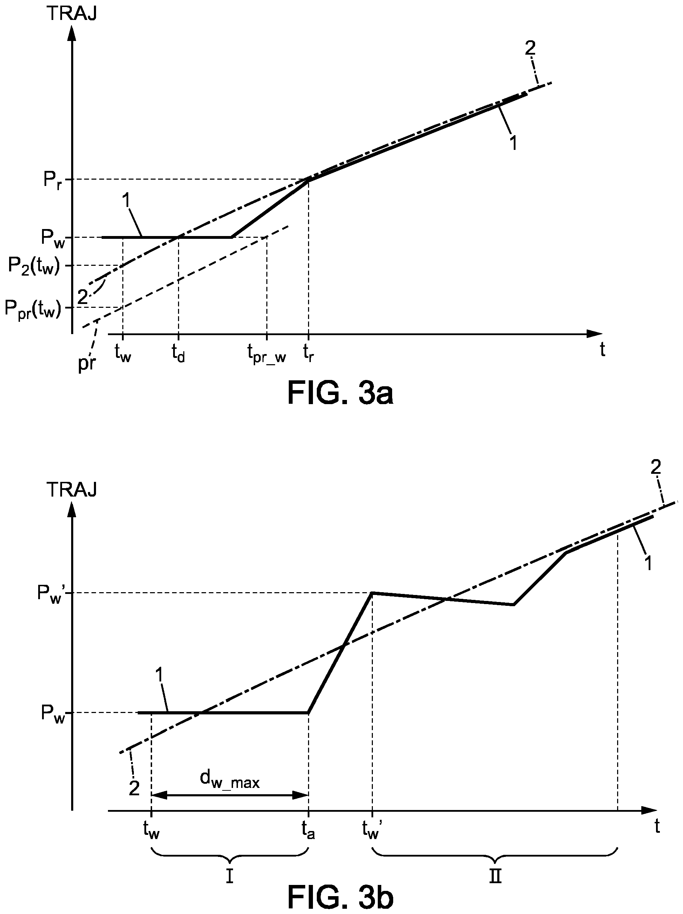

[Fig. 3a] est un diagramme temporel qui illustre cette séquence d'attente, de détection et de ralliement. L'axe horizontal, noté t, repère le temps, et l'axe vertical, noté TRAJ, repère des positions le long de la trajectoire orientée du satellite 2. Les notations introduites ci-dessus sont reprises dans [Fig. 3a]. En outre :
la trace qui est désignée par 2 dans ce diagramme correspond aux positions réelles du satellite 2 à tous les instants ;
la trace qui est désignée par pr correspond aux positions du satellite 2 telles que prédites d'après les données d'éphéméride reçues initialement par la station de réception 1 via le module de communication 11 ; et
la trace qui est désignée par 1 correspond aux positions sur la trajectoire TRAJ vers lesquelles est pointée l'optique 12 de la station de réception 1.

[Fig. 3b] correspond à [Fig. 3a] dans le cas où la station de réception 1 ne détecte pas le passage du satellite 2 par la position d'attente P_{w}. Un tel échec de détection peut avoir de multiples causes, y compris une durée trop courte pendant laquelle des signaux laser ont été reçus à partir de la position d'attente, ou une erreur trop importante dans la position du satellite 2 telle que prédite à partir des données d'éphéméride, de sorte que le satellite 2 avait déjà dépassé la position P_{w} avant que le pointage vers cette position soit réalisé. Dans une telle situation d'échec, le procédé est abandonné après une durée d'attente maximale prédéterminée, notée d_{w_max}. L'instant d'abandon est donc tₐ = t_{w} + d_{w_max}. Puis la séquence d'attente, de détection et de ralliement est recommencée avec une nouvelle position d'attente P_{w}' et un nouvel instant de début d'attente t_{w}' qui est postérieur à l'instant d'abandon tₐ. Dans [Fig. 3b], la référence I désigne la première tentative de ralliement, qui a échoué, et la référence II désigne la seconde tentative de ralliement, qui a réussi.

Pour les modes de mise en oeuvre de l'invention de [Fig. 3a] et [Fig. 3b], la direction de pointage de la station de réception 1 vers la position d'attente P_{w} est fixe dans le référentiel terrestre.

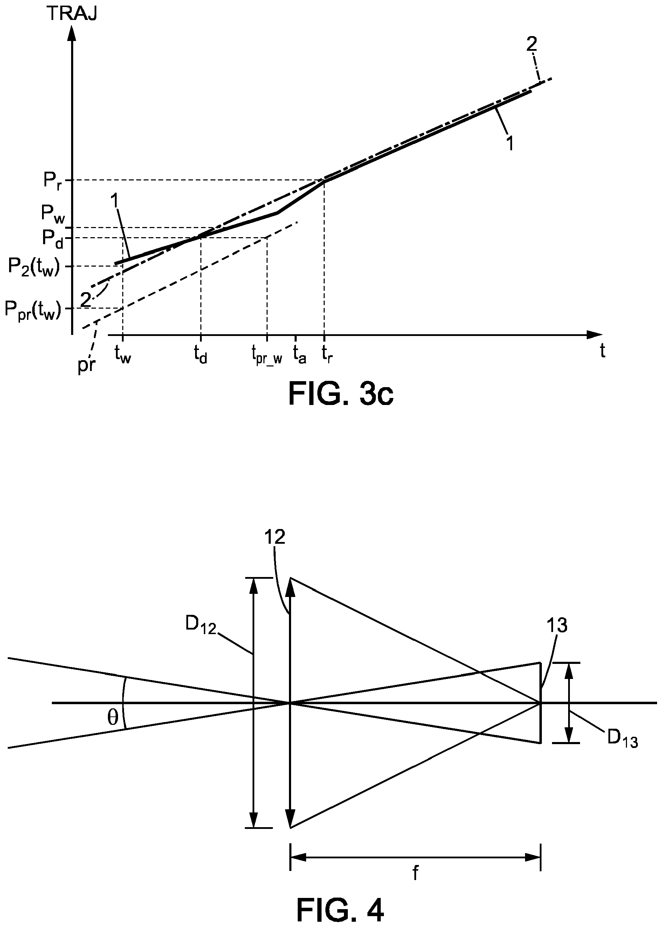

[Fig. 3c] correspond à [Fig. 3a] en illustrant des modes alternatifs de mise en oeuvre de l'invention, pour lesquels le risque est réduit de ne pas détecter les signaux laser alors que le satellite 2 coupe réellement la direction de pointage de l'optique 12 entre les instants t_{w} et tₐ. Dans ces modes alternatifs de mise en oeuvre, le contrôleur 16 commande un mouvement continu de l'optique 12 de sorte que sa direction de pointage suive la trajectoire TRAJ à partir de l'instant de début d'attente t_{w}, dans un segment de la trajectoire qui s'étend de part et d'autre de la position d'attente P_{w}. Ce déplacement de l'optique 12 est effectué de sorte que le point mobile qui est à l'intersection de la direction de pointage de l'optique 12 et de la trajectoire TRAJ se déplace dans le même sens que le satellite 2. Autrement dit, le segment horizontal de la trace 1 dans [Fig. 3a] et [Fig. 3b], qui s'étend à partir de l'instant de début d'attente t_{w}, est remplacé par un segment oblique qui fait un angle avec la trace 2 inférieur à l'angle de pente de cette dernière. Le diagramme de [Fig. 3c] est ainsi obtenu. L'instant de détection t_{d} peut survenir avant ou après que le satellite 2 soit réellement passé par la position P_{w}, celle-ci ayant été utile pour déterminer le secteur angulaire à parcourir par la direction de pointage de l'optique 12 à partir de l'instant de début d'attente t_{w}. Lorsque les signaux laser parviennent dans ces conditions à l'optique 12, la vitesse relative du satellite 2 par rapport à la direction de pointage est plus faible que dans le cas de [Fig. 3a], de sorte que le risque est réduit que les signaux laser ne soient pas détectés à cet instant par le système de photodétection 13. Evidemment, au cas où les signaux laser ne seraient pas détectés pendant la mise en oeuvre d'un procédé conforme à [Fig. 3c], celui-ci peut être recommencé après qu'une durée maximale d'attente se soit écoulée complètement à partir de l'instant de début d'attente. En outre, les données d'éphéméride du satellite 2 peuvent être corrigées sur la base de l'instant de détection t_{d} et de la position réelle P_{d} du satellite à cet instant t_{d}, telle que déterminée par la direction instantanée de pointage de l'optique 11.

Le perfectionnement de l'invention qui est décrit maintenant a pour but de réduire le risque que les signaux laser ne soient pas détectés alors que le satellite 2 coupe la direction de pointage de l'optique 12, après l'instant de début d'attente t_{w}. Pour cela, le système de photodétection 13 peut être conçu pour posséder une surface effective de détection qui soit plus grande.

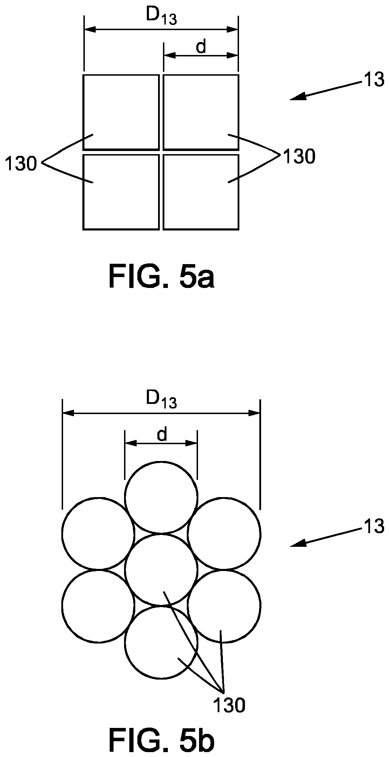

Dans le schéma optique de [Fig. 4], f désigne la longueur focale de l'optique 12 de la station de réception 1, D₁₂ désigne le diamètre de cette optique 12, et D₁₃ désigne une dimension latérale du système de photodétection 13. Si θ est l'angle au sommet, ou angle d'ouverture, du champ optique d'entrée statique de la station de réception 1, alors D₁₃ ≈ θ·f en adoptant l'approximation des optiques minces. Or le nombre d'ouverture N de la station de réception 1 est défini par N = f/D₁₂. Il vient alors : D₁₃ = θ·D₁₂·N. Dans cette expression de la dimension latérale du système de photodétection 13, le nombre d'ouverture N est fixé par la conception optique de la station de réception 1, le diamètre D₁₂ de l'optique 12 doit être assez grand pour collecter une quantité suffisante du flux des signaux laser qui sont émis par le satellite 2, et l'angle d'ouverture θ du champ optique d'entrée statique de la station de réception 1 est de préférence supérieure à l'incertitude qui peut affecter un pointage de la station de réception 1 vers le satellite 2 efficace pour recevoir les signaux laser. Cette incertitude résulte notamment des effets des turbulences atmosphériques qui peuvent dévier la direction de propagation des signaux laser, et aussi d'une contribution UC₁₅ qui est due au système de pointage variable 15. La contribution UC₁₅ est une caractéristique de conception et de construction de ce système de pointage variable 15. La contribution des turbulences atmosphériques, notée UCₐₜₘ, peut être évaluée en fonction du rayon de Fried r₀ selon la formule : UCₐₜₘ = 2,44·λ/r₀, où λ est la longueur d'onde des signaux laser. Alors, l'angle d'ouverture θ du champ optique d'entrée statique de la station de réception 1 est avantageusement supérieur ou égal à un résultat de la somme quadratique (UC₁₅² + UCₐₜₘ²)^{1/2}, préférentiellement supérieur ou égal à un résultat de la somme linéaire UC₁₅ + UCₐₜₘ. Eventuellement, lorsque la position du satellite 2 vers laquelle est pointée la station de réception 1, est déterminée à partir des données d'éphéméride du satellite, une limite supérieure de la contribution angulaire transversale de l'erreur qui affecte la connaissance de la position réelle du satellite 2 peut être ajoutée en outre à la somme précédente, pour déterminer l'angle d'ouverture minimal que devrait préférablement posséder le champ optique d'entrée statique de la station de réception 1. Des applications numériques avec des valeurs usuelles pour θ, par exemple 500 microradians, D₁₂, par exemple 0,4 m (mètre), et N, par exemple 2,5, aboutissent à une valeur de dimension latérale D₁₃ pour le système de photodétection 13, qui est au moins égale à 500 µm (micromètre). Or des photodétecteurs, par exemple du type photodiode à avalanche, qui possèdent une telle dimension latérale sont peu disponibles ou n'existent pas. En effet, de tels photodétecteurs unitaires ont en général des dimensions latérales de l'ordre de ou inférieures à 50 µm. Un aspect supplémentaire de l'invention consiste alors à utiliser en tant que système de photodétection 13 une pluralité de photodétecteurs élémentaires qui sont juxtaposés dans le plan focal de l'optique 12. Le nombre de photodétecteurs élémentaires à utiliser ainsi est de l'ordre de (D₁₃/d)². Ce nombre peut être réduit en utilisant une optique 12 dont le diamètre D₁₂ est plus petit. Par exemple, quatre ou sept photodiodes juxtaposées peuvent constituer le système de photodétection 13, comme représenté dans [Fig. 5a] et [Fig. 5b] respectivement. Dans ces figures, la référence 130 désigne chaque photodétecteur élémentaire. Les deux configurations qui y sont montrées ne sont que des exemples non limitatifs, et les formes représentées pour les contours des surfaces photosensibles individuelles des photodétecteurs 130 sont aussi non-limitatives. En outre, d'autres motifs peuvent être utilisés pour paver la surface totale de photodétection avec les photodétecteurs élémentaires 130.

Bien que l'invention ait été décrite sans évoquer l'angle de pointage en avant («point-ahead angle» en anglais) à appliquer pour la transmission de signaux laser entre des terminaux qui sont mobiles l'un par rapport à l'autre, il est entendu qu'un tel angle de pointage en avant est utilisé, d'une façon bien connue de l'Homme du métier.

Il est aussi entendu qu'un terminal de communication par transmission de signaux laser d'un modèle usuel peut être utilisé à bord du satellite 2, y compris un terminal qui incorpore un système d'acquisition et de poursuite, tout en mettant en oeuvre l'invention au niveau de la station de réception 1.

Enfin, l'invention peut être reproduite en modifiant des aspects secondaires des modes de réalisation qui ont été décrits en détail ci-dessus, tout en conservant certains au moins des avantages cités. Notamment, toutes les valeurs numériques qui ont été citées ne l'ont été qu'à titre d'illustration, et peuvent être changées en fonction de l'application considérée.

## Revendications

1. Procédé de transmission de données par signaux laser, à partir d'un satellite (2) qui est en orbite autour de la Terre à destination d'une station de réception (1) qui est située à la surface de la Terre, le procédé comprenant les étapes suivantes :
/1/ recueillir des données d'éphéméride relatives au satellite (2) ;
/2/ en utilisant les données d'éphéméride, déterminer une position (P_{w}) sur une trajectoire (TRAJ) du satellite (2) par laquelle ledit satellite est prévu de passer après un instant de début d'attente (t_{w}) ;
/3/ à partir de l'instant de début d'attente (t_{w}), pointer une optique (12) de la station de réception (1) qui est adaptée pour collecter les signaux laser, vers la position (P_{w}) déterminée à l'étape /2/, et activer un système de photodétection (13) qui est situé dans un plan focal de l'optique de la station de réception et qui est adapté pour transmettre des signaux électriques correspondant aux signaux laser à une chaîne de réception (14), ladite chaîne de réception délivrant en sortie les données transmises ; puis
/4/ identifier un instant de détection (t_{d}) auquel des signaux laser émis à partir du satellite (2) sont détectés par le système de photodétection (13) ;
/5/ en utilisant l'instant de détection (t_{d}) identifié à l'étape /4/ et des coordonnées de la position sur la trajectoire du satellite (2) pour laquelle les signaux laser émis à partir du satellite ont été détectés audit instant de détection, déterminer un instant de ralliement (tᵣ) postérieur à l'instant de détection et une position du satellite, appelée position de ralliement (Pᵣ), à laquelle le satellite passera audit instant de ralliement ; puis
/6/ pointer l'optique (12) de la station de réception (1) vers la position de ralliement (Pᵣ) et, à partir de ladite position de ralliement et de l'instant de ralliement (tᵣ), tourner progressivement l'optique de la station de réception de façon à ce que ladite optique reste pointée continûment vers le satellite (2) alors que ledit satellite se déplace sur sa trajectoire (TRAJ), et simultanément maintenir une activation du système de photodétection (13) de façon à recevoir les données transmises à partir du satellite pendant que l'optique de la station de réception tourne de façon synchrone par rapport au déplacement du satellite.

2. Procédé selon la revendication 1 suivant lequel, à l'étape /3/, l'optique (12) de la station de réception (1) reste pointée fixement, par rapport à la Terre, vers la position (P_{w}) qui a été déterminée à l'étape 121 sur la trajectoire du satellite (2), à partir de l'instant de début d'attente (t_{w}) jusqu'à l'instant de détection (t_{d}), ou jusqu'à un instant d'un début de procédure de ralliement qui est postérieur audit instant de détection, ou jusqu'à une fin de durée d'attente maximale (d_{w_max}) qui est prédéterminée.

3. Procédé selon la revendication 1 suivant lequel, à l'étape /3/, l'optique (12) de la station de réception (1) est tournée progressivement par rapport à la Terre de façon à viser un point mobile sur la trajectoire (TRAJ) du satellite (2) qui passe ou est destiné à passer par la position (P_{w}) déterminée à l'étape /2/, de sorte qu'une vitesse relative du satellite par rapport audit point mobile soit plus faible qu'une vitesse relative du satellite par rapport à un point de la trajectoire qui serait visé fixement par rapport à la Terre à partir de la station de réception, la station de réception étant ainsi tournée progressivement jusqu'à l'instant de détection (t_{d}), ou jusqu'à un instant d'un début d'une procédure de ralliement qui est postérieur audit instant de détection, ou jusqu'à une fin de durée d'attente maximale (d_{w_max}) qui est prédéterminée.

4. Procédé selon l'une quelconque des revendications précédentes, suivant lequel une nouvelle exécution du procédé est entreprise à partir de l'étape 121 si les signaux laser émis à partir du satellite (2) ne sont pas détectés par le système de photodétection (13) de la station de réception (1) avant une fin de durée d'attente maximale prédéterminée (d_{w_max}).

5. Procédé selon l'une quelconque des revendications précédentes, suivant lequel l'instant de détection (t_{d}) identifié à l'étape /4/ est utilisé pour corriger les données d'éphéméride relatives au satellite (2).

6. Procédé selon l'une quelconque des revendications précédentes, suivant lequel l'optique (12) et le système de photodétection (13) de la station de réception (1) sont adaptés de sorte qu'un angle d'ouverture (θ) d'un champ optique d'entrée statique de ladite station de réception soit supérieur à résultat d'une somme quadratique, de préférence à un résultat d'une somme linéaire, qui comprend au moins les deux contributions suivantes :
une première contribution correspondant à une limite supérieure d'une incertitude angulaire qui affecte la réalisation d'un pointage de l'optique (12) de la station de réception (1), et
une seconde contribution correspondant à une limite supérieure d'une déviation angulaire produite par des turbulences atmosphériques sur une direction de propagation des signaux laser tels que collectés par l'optique (12) de la station de réception (1).

7. Procédé selon l'une quelconque des revendications précédentes, suivant lequel les données transmises comprennent des données d'images.

8. Station de réception (1), destinée à être située à la surface de la Terre et adaptée pour recevoir des données transmises par signaux laser à partir d'un satellite (2) qui est en orbite autour de la Terre, ladite station de réception comprenant :
- des moyens (11) pour recueillir des données d'éphéméride relatives au satellite (2) ;
- une optique (12) qui est adaptée pour collecter les signaux laser ;
- un système de photodétection (13) qui est situé dans un plan focal de l'optique (12) ;
- une chaîne de réception (14), qui est agencée pour recevoir en entrée des signaux électriques produits par le système de photodétection (13) conformément aux signaux laser collectés par l'optique (12), et pour délivrer en sortie les données transmises ;
- un mécanisme (15) de variation d'une direction de pointage de l'optique (12) ; et
- un contrôleur (16), qui est adapté pour contrôler un fonctionnement de la station de réception (1),
le contrôleur (16) étant adapté pour commander le mécanisme (15) de variation de la direction de pointage de l'optique (12) en fonction des données d'éphéméride et d'un instant de détection (t_{d}) des signaux laser par le système de photodétection (13), de façon à exécuter un procédé conforme à l'une quelconque des revendications précédentes.

9. Station de réception (1) selon la revendication 8, suivant lequel le système de photodétection (13) comprend plusieurs photodétecteurs (130) qui sont juxtaposés dans le plan focal de l'optique (12) de la station de réception.

10. Station de réception (1) selon la revendication 8 ou 9, suivant lequel l'optique (12) et le système de photodétection (13) de la station de réception sont adaptés de sorte qu'un angle d'ouverture (θ) d'un champ optique d'entrée statique de ladite station de réception soit supérieur à 200 microradians, de préférence supérieur ou égal à 400 microradians.

## Patentansprüche

1. Verfahren zur Übertragung von Daten per Lasersignale aus einem Satelliten (2), der in einer Umlaufbahn um die Erde ist, zu einer Empfangsstation (1), die sich auf der Erdoberfläche befindet, wobei das Verfahren die folgenden Schritte aufweist:
/1/ Abrufen von Ephemeriden-Daten, die den Satelliten (2) betreffen;
/2/ unter Verwendung der Ephemeriden-Daten, Bestimmen einer Position (P_{w}) des Satelliten (2) auf einer Trajektorie (TRAJ), durch die der Satellit nach einem Wartezeit-Startzeitpunkt (t_{w}) voraussichtlich hindurchgehen wird;
/3/ ab dem Wartezeit-Startzeitpunkt (t_{w}), Ausrichten einer zum Sammeln der Lasersignale angepassten Optik (12) der Empfangsstation (1) hin zu der in Schritt 121 bestimmten Position (P_{w}) und Aktivieren eines Fotodetektionssystems (13), das sich in einer Fokalebene der Optik der Empfangsstation befindet und das angepasst ist, elektrische Signale, die den Lasersignalen entsprechen, an eine Empfangskette (14) zu übertragen, wobei die Empfangskette am Ausgang die übertragenen Daten bereitstellt; dann
/4/ Identifizieren eines Detektionszeitpunkts (t_{d}), an dem aus dem Satelliten (2) ausgesandte Lasersignale von dem Fotodetektionssystem (13) detektiert werden;
/5/ unter Verwendung des in Schritt /4/ identifizierten Detektionszeitpunkts (t_{d}) und von Koordinaten der Position des Satelliten (2) auf der Trajektorie, für die die aus dem Satelliten ausgesandten Lasersignale an dem Detektionszeitpunkt detektiert worden sind, Bestimmen eines Sammelzeitpunkts (tᵣ), der später als der Detektionszeitpunkt ist, und einer Position des Satelliten, Sammelposition (Pᵣ) genannt, die der Satellit an dem Sammelzeitpunkt passieren wird; dann
/6/ Ausrichten der Optik (12) der Empfangsstation (1) hin zu der Sammelposition (Pᵣ) und ab der Sammelposition und ab dem Sammelzeitpunkt (tᵣ), fortlaufendes Schwenken der Optik der Empfangsstation derart, dass die Optik kontinuierlich hin zu dem Satelliten (2) ausgerichtet bleibt, während sich der Satellit auf seiner Trajektorie (TRAJ) fortbewegt, und gleichzeitig Beibehalten einer Aktivierung des Fotodetektionssystems (13), um so die aus dem Satelliten übertragenen Daten zu empfangen, während die Optik der Empfangsstation auf eine mit der Fortbewegung des Satelliten synchrone Weise geschwenkt wird.

2. Verfahren nach Anspruch 1, gemäß welchem in Schritt /3/ die Optik (12) der Empfangsstation (1) ortsfest bezüglich der Erde hin zu der in Schritt /2/ bestimmten Position (P_{w}) auf der Trajektorie des Satelliten (2) ausgerichtet bleibt und zwar ab dem Wartezeit-Startzeitpunkt (t_{w}) bis zu dem Detektionszeitpunkt (t_{d}) oder bis zu einem Zeitpunkt eines Start einer Sammelprozedur, der später als der Detektionszeitpunkt ist, oder bis zu einem Ende einer maximalen Wartezeitdauer (d_{w_max}), die vorgegeben ist.

3. Verfahren nach Anspruch 1, gemäß welchem in Schritt /3/ die Optik (12) der Empfangsstation (1) fortlaufend bezüglich der Erde geschwenkt wird, um einen beweglichen Punkt auf der Trajektorie (TRAJ) des Satelliten (2) anzuvisieren, der von der in Schritt /2/ bestimmten Position (P_{w}) passiert wird oder passiert werden soll, derart, dass eine relative Geschwindigkeit des Satelliten bezüglich des beweglichen Punkts kleiner ist als eine relative Geschwindigkeit des Satelliten bezüglich eines Punkts der Trajektorie, der ortsfest bezüglich der Erde aus der Empfangsstation anvisiert wird, die Empfangsstation also fortlaufend geschwenkt wird und zwar bis zu dem Detektionszeitpunkt (t_{d}) oder bis zu einem Zeitpunkt eines Starts einer Sammelprozedur, der später als der Detektionszeitpunkt ist, oder bis zu einem Ende einer maximalen Wartezeitdauer (d_{w_max}), die vorgegeben ist.

4. Verfahren nach einem der vorstehenden Ansprüche, gemäß welchem eine erneute Ausführung des Verfahrens ab dem Schritt 121 unternommen wird, falls die aus dem Satelliten (2) ausgesandten Lasersignale vor einem Ende einer maximalen Wartezeitdauer (d_{w_max}) von dem Fotodetektionssystem (13) der Empfangsstation (1) nicht detektiert worden sind.

5. Verfahren nach einem der vorstehenden Ansprüche, gemäß welchem der in Schritt /4/ identifizierte Detektionszeitpunkt (t_{d}) verwendet wird, um die den Satelliten (2) betreffenden Ephemeriden-Daten zu korrigieren.

6. Verfahren nach einem der vorstehenden Ansprüche, gemäß welchem die Optik (12) und das Fotodetektionssystem (13) der Empfangsstation (1) derart angepasst sind, dass ein Öffnungswinkel (Θ) eines statischen optischen Eintrittsfelds der Empfangsstation größer ist als ein Resultat einer quadratischen Summe, bevorzugt als ein Resultat einer linearen Summe, die mindestens die zwei folgenden Beiträge aufweist:
einen ersten Beitrag, der einer oberen Grenze einer Winkelunschärfe entspricht, die sich auf die Realisierung einer Ausrichtung der Optik (12) der Empfangsstation (1) auswirkt, und
einen zweiten Beitrag, der einer oberen Grenze einer Winkelabweichung entspricht, die durch atmosphärische Turbulenzen auf einer Ausbreitungsrichtung der Lasersignale, wie der von der Optik (12) der Empfangsstation (1) gesammelten, hervorgerufen wird.

7. Verfahren nach einem der vorstehenden Ansprüche, gemäß welchem die übertragenen Daten Bilddaten aufweisen.

8. Empfangsstation (1), die vorgesehen ist, auf der Erdoberfläche angeordnet zu werden, und angepasst ist, aus einem Satelliten (2), der sich in einer Umlaufbahn um die Erde befindet, per Lasersignal übertragene Daten zu empfangen, wobei die Empfangsstation aufweist:
- Einrichtungen (11) zum Abrufen von Ephemeriden-Daten, die den Satelliten (2) betreffen;
- eine Optik (12), die angepasst ist, die Lasersignale zu sammeln;
- ein Fotodetektionssystem (13), das sich in einer Fokalebene der Optik (12) befindet;
- eine Empfangskette (14), die eingerichtet ist, um am Eingang elektrische Signale, die von dem Fotodetektionssystem (13) entsprechend den von der Optik (12) gesammelten Lasersignalen erzeugt werden, zu empfangen und am Ausgang die übertragenen Daten bereitzustellen;
- einen Mechanismus (15) zum Variieren einer Ausrichtungsrichtung der Optik (12); und
- eine Steuerung (16), die angepasst ist, einen Betrieb der Empfangsstation (1) zu steuern,
wobei die Steuerung (16) angepasst ist, den zum Variieren einer Ausrichtungsrichtung der Optik (12) bereitgestellten Mechanismus (15) als Funktion der Ephemeriden-Daten und eines Detektionszeitpunkts (t_{d}), der ein Zeitpunkt einer Detektion der Lasersignale durch das Fotodetektionssystem (3) ist, zu steuern, um so ein Verfahren nach einem der vorstehenden Ansprüche durchzuführen.

9. Empfangsstation (1) nach Anspruch 8, gemäß welcher das Fotodetektionssystem (13) mehrere Fotodetektoren (130) aufweist, die in der Fokalebene (12) der Empfangsstation nebeneinander angeordnet sind.

10. Empfangsstation (1) nach Anspruch 8 oder 9, gemäß welcher die Optik (12) und das Fotodetektionssystem (13) der Empfangsstation derart angepasst sind, dass ein Öffnungswinkel (Θ) eines statischen optischen Eintrittsfelds der Empfangsstation größer als 200 Mikroradiant, bevorzugt größer oder gleich 400 Mikroradiant ist.

## Claims

1. A method for transmitting data by laser signals, from a satellite (2) which is orbiting Earth, to a receiving station (1) which is located on the surface of Earth, the method comprising the following steps:
/1/ collecting ephemeris data relating to the satellite (2);
/2/ using the ephemeris data, determining a position (P_{w}) on a trajectory (TRAJ) of the satellite (2) through which said satellite is planned to pass after a waiting start time (t_{w});
/3/ from the waiting start time (t_{w}), pointing an optics (12) of the receiving station (1) which is adapted to collect the laser signals, towards the position (P_{w}) determined in step 121, and activating a photodetection system (13) which is located in a focal plane of the optics of the receiving station and which is adapted to transmit electrical signals corresponding to the laser signals to a receive chain (14), said receive chain outputting the transmitted data; then
/4/ identifying a detection time (t_{d}) at which laser signals emitted from the satellite (2) are detected by the photodetection system (13);
/5/ using the detection time (t_{d}) identified in step /4/ and coordinates of the position on the trajectory of the satellite (2) for which the laser signals emitted from the satellite were detected at said detection time, determining a homing time (tᵣ) subsequent to the detection time and a position of the satellite, called homing position (Pᵣ), at which the satellite will pass at said homing time; then
/6/ pointing the optics (12) of the receiving station (1) towards the homing position (Pᵣ) and, from said homing position and the homing time (tᵣ), gradually rotating the optics of the receiving station so that said optics remains continuously pointed towards the satellite (2) while said satellite moves on its trajectory (TRAJ), and simultaneously maintaining an activation of the photodetection system (13) so as to receive the data transmitted from the satellite while the optics of the receiving station rotates synchronously relative to the displacement of the satellite.

2. The method according to claim 1 wherein, in step /3/, the optics (12) of the receiving station (1) remains fixedly pointed, relative to Earth, towards the position (P_{w}) which was determined in step 121 on the trajectory of the satellite (2), from the waiting start time (t_{w}) until the detection time (t_{d}), or until a time of a start of a homing procedure which is subsequent to said detection time, or until an end of maximum waiting period (d_{w_max}) which is predetermined.

3. The method according to claim 1 wherein, in step /3/, the optics (12) of the receiving station (1) is gradually rotated relative to Earth so as to aim at a moving point on the trajectory (TRAJ) of the satellite (2) which passes or is intended to pass through the position (P_{w}) determined in step 121, so that a relative speed of the satellite with respect to said moving point is lower than a relative speed of the satellite with respect to a point of the trajectory which would be targeted fixedly relative to Earth from the receiving station, the receiving station thus being gradually rotated until the detection time (t_{d}), or until a time of a start of a homing procedure which is subsequent to said detection time, or until an end of maximum waiting period (d_{w_max}) which is predetermined.

4. The method according to any one of the preceding claims, wherein a new execution of the method is undertaken from step 121 if the laser signals transmitted from the satellite (2) are not detected by the photodetection system (13) of the receiving station (1) before an end of predetermined maximum waiting period (d_{w_max}).

5. The method according to any one of the preceding claims, wherein the detection time (t_{d}) which is identified in step /4/ is used to correct the ephemeris data relating to the satellite (2).

6. The method according to any one of the preceding claims, wherein the optics (12) and the photodetection system (13) of the receiving station (1) are adapted so that an aperture angle (θ) of a static input optical field of said receiving station is greater than a result of a quadratic sum, preferably than a result of a linear sum, which comprises at least both following contributions:
a first contribution corresponding to an upper limit of an angular uncertainty which affects the realisation of a pointing of the optics (12) of the receiving station (1), and
a second contribution corresponding to an upper limit of an angular deviation produced by atmospheric turbulence on a direction of propagation of the laser signals as collected by the optics (12) of the receiving station (1).

7. The method according to any one of the preceding claims, wherein the transmitted data comprises image data.

8. A receiving station (1), intended to be located on the surface of Earth and adapted to receive data transmitted by laser signals from a satellite (2) which is orbiting Earth, said receiving station comprising:
- means (11) for collecting ephemeris data relating to the satellite (2);
- an optic (12) which is adapted to collect the laser signals:
- a photodetection system (13) which is located in a focal plane of the optics (12):
- a receive chain (14), which is arranged to receive as input electrical signals produced by the photodetection system (13) in accordance with the laser signals collected by the optics (12), and to output the transmitted data;
- a mechanism (15) for varying a pointing direction of the optics (12); and
- a controller (16), which is adapted to monitor an operation of the receiving station (1),
the controller (16) being adapted to control the mechanism (15) for varying the pointing direction of the optics (12) depending on the ephemeris data and a detection time (t_{d}) of the laser signals by the photodetection system (13), so as to execute a method in accordance with any one of the preceding claims.

9. The receiving station (1) according to claim 8, wherein the photodetection system (13) comprises several photodetectors (130) which are juxtaposed in the focal plane of the optics (12) of the receiving station.

10. The receiving station (1) according to claim 8 or 9, wherein the optics (12) and the photodetection system (13) of the receiving station are adapted so that an aperture angle (θ) of a static input optical field of said receiving station is greater than 200 microradians, preferably greater than or equal to 400 microradians.
